# EUROPEAN PATENT APPLICATION

(11) **EP 1 610 323 A1**
(43) Date of publication of application: **28.12.2005**
(21) Application number: 04102870.5
(22) Date of filing: 22.06.2004
(51) Int. Cl.: G11B 20/18, G11B 20/12

(54) **Defect management on file level**

(71) Applicant: Koninklijke Philips Electronics N.V., 5621 BA Eindhoven (NL)
(72) Inventor: The designation of the inventor has not yet been filed
(74) Representative: De Vries, Jan

(57) **Abstract**

A method of defect management is for use in recording information on a record carrier. A device for scanning a track on a record carrier reads blocks of information on logical addresses from corresponding physical addresses. The logical addresses are translated into the physical addresses in dependence on defect management information (54,55) that includes defect information on a defective status of physical addresses and remapping information (56,57,58,59) on translating a logical address initially mapped to an initial physical address to an alternate physical address. The method includes determining and additionally storing file remapping information (60) based on the defect management information and organized corresponding to files (51,52), and retrieving the file remapping information (60) for retrieving defect management information (61,62,63) related to a file to be retrieved. Additionally applying the file remapping information increases the speed of reading of data files, because the necessary replacement blocks are retrieved as a set in advance.

## Description

The invention relates to a method of defect management for use in recording information on a record carrier having a track for carrying information blocks having logical addresses, which recording comprises locating each block at a physical address in the track, translating the logical addresses into the physical addresses and vice versa in dependence on defect management information, managing the defect management information, the defect management information comprising defect information on a defective status of physical addresses and remapping information on translating a logical address initially mapped to an initial physical address to an alternate physical address.

The invention further relates to a device for scanning a record carrier having a track for carrying information blocks having logical addresses, which device comprises scanning means for scanning the track on the record carrier, and control means for controlling locating each block at a physical address in the track, the control means comprising addressing means for translating the logical addresses into the physical addresses and vice versa in dependence on defect management information, and defect management means for managing the defect management information, the defect management information comprising defect information on a defective status of physical addresses and remapping information on translating a logical address initially mapped to an initial physical address to an alternate physical address.

The invention further relates to a computer program product for defect management for use in recording information.

A device and method for recording information on a record carrier and defect management are known from WO01/06512. The document relates to optical record carriers such as CD or DVD. Optical recording devices have means for scanning the track on a record carrier, which may include recording means for recording the information in information blocks having logical addresses on the record carrier at corresponding allocated physical addresses. The document describes writing real-time information like video signals on an optical disc having an administrative area, a spare area, and a user area. Normally recording takes place in files containing the information blocks in a free part of the user area. Usually file system information is managed on a different level, e.g. in a host computer controlling a disk drive, whereas the device receives read and write commands. If during the recording process a defective block is encountered a replacement recording is made in a pre-reserved area, after which normal recording continues in the original free part. The process of writing data blocks at an alternate location is commonly called defect management. Defect management information is stored indicating the defective status of physical addresses and includes remapping information indicating alternate physical addresses where the user information blocks are stored. Defect management information is created and maintained indicating the defective physical addresses and the replacements made. During reading the defect management information has to be retrieved, and information blocks are to be retrieved from the alternate physical address whenever necessary.

A problem of reading the information blocks is that the requirements for speed and performance of the scanning device may be high. The known defect management method will degrade the performance due to the need for reading remapped information blocks at the alternate physical addresses.

It is an object of the invention to provide a system of defect management that facilitates reading information while maintaining a high data retrieval performance.

For this purpose, the method of defect management as described in the opening paragraph comprises determining and additionally storing file remapping information based on the defect management information and organized corresponding to files, and retrieving the file remapping information for retrieving defect management information related to a file to be retrieved.

For this purpose, in the device for scanning as described in the opening paragraph, the control means comprise file remapping retrieval means for retrieving file remapping information for retrieving defect management information related to a file to be retrieved, which file remapping information is based on the defect management information and organized corresponding to files.

The file remapping information is additionally stored, i.e. the traditional defect management information is stored according to the applicable recording format, and in addition thereto the file remapping information is stored in a different location. When information blocks of a file are to be retrieved, the file remapping information is retrieved which provides the alternate physical addresses of remapped information blocks in the file. The measures have the effect that remapped information blocks included in the file are known, and are retrievable at a convenient moment, e.g. before starting reading at the original location of the file. This has the advantage that the performance of the device is not degraded due to interruptions for reading remapped replacement blocks each time a defective physical address is encountered. At a time when the reading of information blocks may conveniently be suspended, e.g. due to sufficient data being available in buffers or no pending read request, the remapped information blocks are retrieved for a subsequent part of a file.

The invention is also based on the following recognition. Traditional disk drives have to perform defect management during reading information blocks. The defect management information is organized based on the sequence of logical addresses or physical addresses, and may be influenced by the order of the occurrence of defects at various spots. Remapped data blocks have to be retrieved during reading from various defect management locations based on the range of logical addresses in read operations. Moreover, in practice, most read operations concern data stored in a file, which may include various nonconsecutive ranges of logical addresses. The inventors have seen the subsequent read operations that relate to a file will therefore traditionally result in many read actions of remapped information blocks in different defect management locations, which each require interrupting the main read process. By generating additional remapping information that is organized corresponding to the files, e.g. contains a table of remapped addresses for each file, a coherent subset of remapped information blocks is retrievable based on the file remapping information. Coherent retrieval of the subset of defect management information for the file increases the performance during reading the file. Note that the additional remapping information may even be incomplete, e.g. contains only a part of the remapping information of a file, or contains a few remapped blocks actually not part of the file. If so, some defect management information may still need recovering based on the traditional defect management information organized on logical addresses. Nevertheless the performance of the device is improved due to the substantial part of the remapped information blocks in the subset that is efficiently recovered via the file remapping information.

It has been noted that full file system knowledge in the disk drive would allow anticipating any remapped information blocks to be retrieved. However, traditional disk drives lack file system knowledge, and adding such full file system knowledge to the scanning device would be a heavy burden. Retrieving additionally stored file remapping information that is organized corresponding to files allows the devices to easily recover remapped data blocks corresponding to a file. Hence generating, additionally storing and retrieving such file remapping information corresponding to files are required, which may be performed at a different moment in time, or at a different place. For example, a computer program may be activated in a host processor to generate and/or retrieve the file remapping information.

In an embodiment of the scanning device the control means comprise file remapping storage means for determining and additionally storing the file remapping information based on the defect management information and organized corresponding to files. This has the advantage that generating the file remapping information is included in the device, allowing the device to independently increase the reading performance.

In an embodiment of the scanning device the file remapping storage means are arranged for determining the file remapping information based on received write or read commands. By analyzing the received commands the information blocks being part of a single file are detected, and the corresponding remapping information is generated. This has the advantage that the scanning device determines the remapping information without detailed file system knowledge.

In an embodiment of the scanning device the file remapping storage means are arranged for writing said file remapping information on the record carrier. Although the file remapping information may be stored temporarily in a buffer, it is advantageous to additionally store the file remapping information on the record carrier. Hence the file remapping information, once generated and stored, is always immediately retrievable for future use.

In an embodiment of the scanning device the file remapping retrieval means are arranged for said retrieving defect management information by reading and temporarily storing defect management information for at least a part of the file to be retrieved subsequent to a part of the file covered by a current read command. Effectively it is predicted that further parts of the file are likely to be read in the future. The file remapping information is used to read and store the corresponding defect management information in advance. This has the advantage that, when such further part of the file is to be retrieved later, no time is lost for retrieving the corresponding defect management information.

Further preferred embodiments of the device and method according to the invention are given in the appended claims, disclosure of which is incorporated herein by reference.

These and other aspects of the invention will be apparent from and elucidated further with reference to the embodiments described by way of example in the following description and with reference to the accompanying drawings, in which
Figure 1a shows a record carrier (top view),
Figure 1b shows a record carrier (cross section),
Figure 2 shows a scanning device having a file remapping defect management function,
Figure 3 shows remapping of defective locations,
Figure 4 shows file remapping information,
Figure 5 shows a process of file remapping defect management,
Figure 5A shows the creation of file remapping information, and
Figure 5B shows the retrieval and use of file remapping information.
Corresponding elements in different Figures have identical reference numerals.

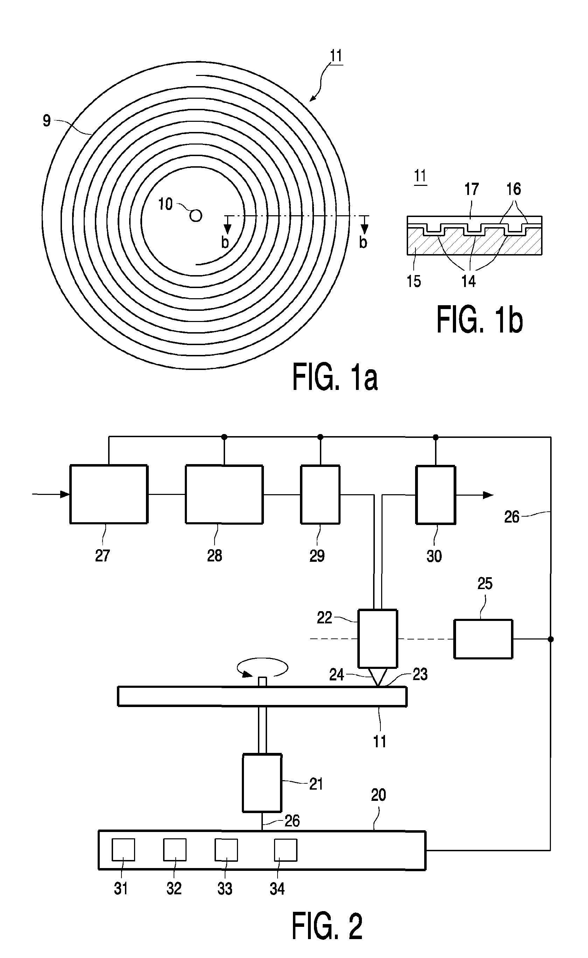

Figure 1a shows a disc-shaped record carrier 11 having a track 9 and a central hole 10. The track 9, being the position of the series of (to be) recorded marks representing information, is arranged in accordance with a spiral pattern of turns constituting substantially parallel tracks on an information layer. The record carrier may be optically readable, called an optical disc, and has an information layer of a recordable type. Examples of a recordable disc are the CD-RW, and rewritable versions of DVD, such as DVD+RW, and the high density writable optical disc using blue lasers, called Blu-ray Disc (BD). Further details about the DVD disc can be found in reference: *ECMA-267: 120 mm DVD - Read-Only Disc - (1997)*. The information is represented on the information layer by recording optically detectable marks along the track, e.g. crystalline or amorphous marks in phase change material. The track 9 on the recordable type of record carrier is indicated by a pre-embossed track structure provided during manufacture of the blank record carrier. The track structure is constituted, for example, by a pregroove 14 in Figure 1b which enables a read/write head to follow the track during scanning. The track structure comprises position information including so-called physical addresses, for indicating the location of units of information, usually called information blocks. The position information includes specific synchronizing marks for locating the start of such information blocks.

Figure 1b is a cross-section taken along the line b-b of the record carrier 11 of the recordable type, in which a transparent substrate 15 is provided with a recording layer 16 and a protective layer 17. The protective layer 17 may comprise a further substrate layer, for example as in DVD where the recording layer is at a 0.6 mm substrate and a further substrate of 0.6 mm is bonded to the back side thereof. The pregroove 14 may be implemented as an indentation or an elevation of the substrate 15 material, or as a material property deviating from its surroundings.

The record carrier 11 is intended for carrying digital information in blocks under control of a file management system. The file management system is a predefined set of rules for storing information blocks and keeping record of where the information blocks are stored and which information blocks together constitute a logical file, for example UDF (Universal Disk Format). The information may include real-time information to be recorded and reproduced continuously, in particular information representing digitally encoded video according to a standardized format like MPEG2.

Figure 2 shows a scanning device having a file remapping defect management function. The device is for accessing information on a record carrier 11 of a type which is writable or re-writable, for example CD-R or CD-RW, or DVD+RW or BD. The device is provided with means for scanning the track on the record carrier which means include a drive unit 21 for rotating the record carrier 11, a head 22, a positioning unit 25 for coarsely positioning the head 22 in the radial direction on the track, and a control unit 20. The head 22 comprises an optical system of a known type for generating a radiation beam 24 guided through optical elements focused to a radiation spot 23 on a track of the information layer of the record carrier. The radiation beam 24 is generated by a radiation source, e.g. a laser diode. The head further comprises (not shown) a focusing actuator for moving the focus of the radiation beam 24 along the optical axis of said beam and a tracking actuator for fine positioning the spot 23 in a radial direction on the center of the track. The tracking actuator may comprise coils for radially moving an optical element or may alternatively be arranged for changing the angle of a reflecting element.

The marks may be in any optically readable form, e.g. in the form of areas with a reflection coefficient different from their surroundings, obtained when recording in materials such as dye, alloy or phase change material, or in the form of areas with a direction of magnetization different from their surroundings, obtained when recording in magnetooptical material. For reading the radiation reflected by the information layer is detected by a detector of a usual type, e.g. a four-quadrant diode, in the head 22 for generating a read signal and further detector signals including a tracking error and a focusing error signal for controlling said tracking and focusing actuators. The read signal is processed by read processing unit 30 of a usual type including a demodulator, deformatter and output unit to retrieve the information. Hence retrieving means for reading information include the drive unit 21, the head 22, the positioning unit 25 and the read processing unit 30.

The device may be a read device, or may comprise write processing means for processing the input information to generate a write signal to drive the head 22, which means comprise an (optional) input unit 27, and a formatter 28 and a modulator 29. For writing information the radiation is controlled to create optically detectable marks in the recording layer. The marks are formed by means of the spot 23 generated on the recording layer via the beam 24 of electromagnetic radiation.

Digital data is stored on the record carrier according to a predefined recording format. Writing and reading of information for recording on optical disks and formatting, error correcting and channel coding rules are well-known in the art, e.g. from the CD and DVD system.

The control unit 20 is connected via control lines 26, e.g. a system bus, to said input unit 27, formatter 28 and modulator 29, to the read processing unit 30, and to the drive unit 21, and the positioning unit 25. The control unit 20 comprises control circuitry, for example a microprocessor, a program memory and control gates, for performing the procedures and functions according to the invention as described below. The control unit 20 may also be implemented as a state machine in logic circuits.

The formatter 28 is for adding control data and formatting and encoding the data according to the recording format, e.g. by adding error correction codes (ECC), interleaving and channel coding. Further the formatter 28 comprises synchronizing means for including synchronizing patterns in the modulated signal. The formatted units comprise address information and are written to corresponding addressable locations on the record carrier under the control of control unit 20. The formatted data from the output of the formatter 28 is passed to the modulator 29, which generates a laser power control signal which drives the radiation source in the optical head. The formatted units presented to the input of the modulation unit 29 comprise address information and are written to corresponding addressable locations on the record carrier under the control of control unit 20.

The control unit 20 is arranged for controlling the accessing of the information blocks by locating each block at a physical address in the track, and for defect management as described below. The control unit includes the following cooperating units: an addressing unit 31, a defect management unit 32, a file remapping storage unit 33, and a file remapping retrieval unit 34, which units are for example implemented in firmware.

In an embodiment the recording device is a storage device only, e.g. an optical disc drive for use in a computer. The control unit 20 is arranged to communicate with a processing unit in the host computer system via a standardized interface. Digital data is interfaced to the formatter 28 and the read processing unit 30 directly.

In an embodiment the device is arranged as a stand alone unit, for example a video recording apparatus for consumer use. The control unit 20, or an additional host control unit included in the device, is arranged to be controlled directly by the user, and to perform the functions of the file management system. The device includes application data processing, e.g. audio and/or video processing circuits. User information is presented on the input unit 27, which may comprise compression means for input signals such as analog audio and/or video, or digital uncompressed audio/video. Suitable compression means are for example described for audio in WO 98/16014-A1, and for video in the MPEG2 standard. The input unit 27 processes the audio and/or video to units of information, which are passed to the formatter 28. The read processing unit 30 may comprise suitable audio and/or video decoding units.

The addressing unit 31 is for translating physical addresses into logical addresses and vice versa in dependence of remapping information. The logical addresses constitute a contiguous user data storage space to be used for storing sequences of information blocks, such as files under control of a file management system, for example UDF. The remapping unit 32 is for managing the remapping information relating to at least one remapping area, e.g. for creating, updating and storing suitable tables of remapping information. The remapping information is indicative for translating a logical address initially mapped to a physical address in the user data area to an alternate physical address, which alternate physical address may be located in a dedicated and separate spare area, or may be provided locally by adapting the mapping of higher logical addresses (usually called slipping).

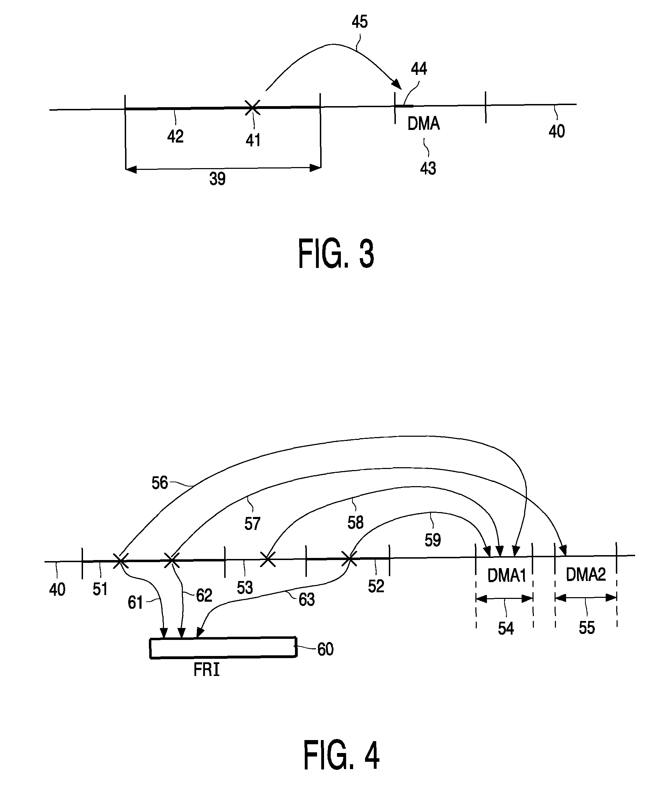

Figure 3 shows remapping of defective locations. A physical address space 40 is schematically represented by a horizontal line. A series of blocks 42 is to be recorded in an allocated physical address range 39. However a defect 41 interrupts the allocated physical address range. Remapping 45 is the process that a block 44 having a logical address corresponding to the physical address 41 that is defective is stored in an alternative physical address in a defect management area (DMA) 43. The remapping information provides data for translating the logical address initially mapped to a physical address exhibiting a defect to an alternate physical address in a defect management area, for example an entry in a secondary defect list including the logical address of the remapped block and its corresponding physical address. Alternatively remapping information may include data for translation of a physical address of a defect to a different physical address in a defect management area.

The defect management areas are located on the record carrier according to a recording area layout, and may be part of a system area assigned to system use. In the layout physical address are assigned a specific logical address of a user data area, or to a defect management area or system area, etc. The layout may be predefined, or may be defined according to parameters included in the system area. For example, the defect management information, or other system information, may include assignment information indicative of assignment of physical addresses in first parts of the track to at least one user data area, assignment of physical addresses in second parts of the track to defect management areas, and assignment of the defect management information to the defect management areas. The assignment of the defect management information to the defect management areas may indicate the use of the defect management area, for example a primary defect list and a secondary defect list, or replacement area for a specific type of defects.

The device is provided with a file remapping defect management function as follows. In a recording device the file remapping storage unit 33 is for determining and additionally storing file remapping information. Note that the file remapping information is additionally created using the defect management information as generated by the defect management unit 32. The file remapping information may contain a list of references to remapped information blocks, organized as a table of entries per file. The file remapping information may be stored in a local buffer memory, e.g. a local hard disk, or may be stored on the record carrier. Further practical examples are described below. The device has file remapping retrieval means 34 for retrieving the file remapping information when a file needs to be read. Based on the references in the file remapping information the defect management information related to the file is read, i.e. the remapped information blocks are read from the defect management areas and temporarily stored in a buffer until needed. When during reading the file from its original location a defective physical address is encountered, the replacement block is taken from the buffer. Note that the file remapping information is based on the usual defect management information, but has been selected and sorted corresponding to the files.

Figure 4 shows file remapping information. A physical address space 40 is schematically represented by a horizontal line. A file has been recorded having a first part 51 and a second part 52 separated by an intermediate area 53. The file contains a few defective physical addresses. A first defective physical address originally assigned to a logical address has been remapped to a first defect management area DMA1 54 as indicated by arrow 56. A second defective physical address has been remapped to a second defect management area DMA2 55 as indicated by arrow 57. In the intermediate area a third defect has been remapped to the first defect management area DMA1 as indicated by arrow 58. A fourth defect has been remapped to the first defect management DMA1 are as indicated by arrow 59. Note that the remapped locations in the defect management areas are in a random order, e.g. due to the order of detecting the defects. There is no relation to the defect management area selected and the position of defects within or outside of the file parts 51,52. For example the occurrence of the remapped information blocks in the first defect management area 54 is anti-chronological.

According to the invention a separate file remapping information FRI 60 is created, that contains references to defects in the file as indicated by arrows 61,62,63, which are ordered according to the order of the information blocks in the file. The file remapping references may be addresses of remapped blocks in the defect management areas. The actual contents of the remapped blocks are stored in the defect management areas. As the file remapping information is based on references to the replacement blocks, it may be fairly compact. A buffer may be filled with the contents of the blocks read from the defect management areas before the actually reading of the corresponding part of the file as illustrated below.

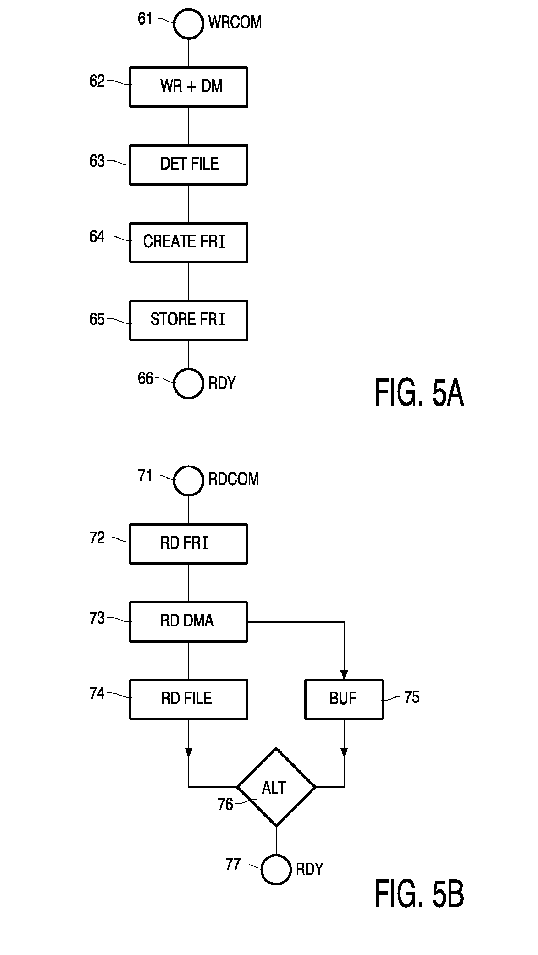

Figure 5 shows a process of file remapping defect management. In Figure 5A the creation of file remapping information is illustrated. In a first step WRCOM 61 a write command for writing (parts of) a file is received. In a step WR+DM 62 the information blocks are written on the original physical addresses, while it is detected whether a physical address is defective. In that case an alternate physical address is assigned via the defect management unit 32. In a step DET FILE 63 it is detected which ranges of logical addresses are parts of a file, e.g. based on consecutively received writing commands. In a step CREATE FRI 64 a table of references is created which contains the physical addresses of remapped information blocks for the file. In a step 65 STORE FRI the file remapping information is stored. Note that the file remapping information may be stored in a temporary buffer, e.g. a local memory or a local hard disk. In an embodiment the file remapping information is stored on the record carrier, e.g. as a file or in a special reserved system area. After writing the range of logical addresses processing of the command is completed at node RDY 66.

Figure 5B shows the retrieval and use of file remapping information. In a first step RDCOM 71 a read command for reading (parts of) a file is received. In a step RD FRI 72 the file remapping information is retrieved, e.g. from a local buffer memory. In an embodiment the file remapping information is retrieved from the record carrier, e.g. from a dedicated file having a predefined name. Subsequently in step RD DMA 73 replacement blocks from the alternate physical addresses are read from the defect management area (spare areas) and temporarily stored in a buffer BUF 75. In step RD FILE 74 information blocks are read from the original physical addresses. In step ALT 76 it is detected if an alternate physical address has been assigned, i.e. a replacement block has already been read and is available in the buffer 75. If so, the replacement block is retrieved from the buffer, and the buffer space is released for further use. After reading the range of logical addresses processing of the command is completed at node RDY 77. Advantageously the reading process in step 74 may be instructed to skip reading the defective physical address, which may prevent unnecessary retries.

The file remapping defect management handling mentioned above consists of reading remapped entries for a file in a single read action. The read action could take place at various points in time, which do not substantially deteriorate the reading speed of the main data. Examples of such points in time are:
- prior to reading any other data of the file
- during the reading of the file if the drive has to perform a jump
- during the reading of the file when the drive has some 'spare' time due to sufficient cache filling
- just before the first remapped data block is needed
Note that reading many remapped entries in a single read action and storing them in memory creates a performance advantage, as the drive doesn't have to perform (possibly) multiple accesses to the spare area(s) on the disc. If all the remapped data for (part of) a file is in its memory, the drive can from that point on deliver the data belonging to the (part of the) file equally fast or possibly even faster than a similar drive without any form of defect management could. To allow reading the remapped entries first file remapping information needs to be made available, for example stored in a buffer or at some location on the disc. Below first various ways to obtain the file remapping information to be stored are explained. After that it is described how this information can be stored in an efficient way on disc.

The first issue to be addressed is how the drive can determine which remapped entries belong to a single file. The drive can acquire this knowledge via the following ways.

In a first embodiment the file remapping storage unit 33 is arranged for analyzing the write commands, i.e. analyze during writing. Typically files are written in single write actions (or in multiple smaller related actions in a short period of time). Via analyzing the write actions the drive can make an estimation of which data belongs to a certain file and as a next step determine which remapped entries should belong together in a single set.

In a second embodiment the file remapping storage unit 33 is arranged for analyzing the read commands, i.e. analyze during reading. The read commands also convey a lot of information about the file structures on disc. As stated for writing files are typically read in single (or a few) read actions. The drive should scan the read commands it receives on the address ranges requested in the commands and on the relative timing between the various read commands. Based on that information a good estimate of the file layout on the disc can be created in due time.

In a third embodiment the file remapping storage unit 33 is arranged for performing a special communication protocol between the drive and an application in a host system. The protocol either informs the drive about the file layout on the disc or just sends the drive the correct additional table of file remapping information as prepared in the host.

In a further embodiment of the device the file remapping storage unit 33 is arranged for detecting file remapping information from file system information. A convenient way to get information about the contents of a disc is via the File System information present on the disc. Typically this File System knowledge is not implemented in a drive, which means that the drive has to use other ways to get information to base various decisions on. However, a (limited) amount of file system knowledge may be included in the drive to allow the drive to decide which ranges of logical addresses are parts of a file.

A further issue to be addressed is the way the information can be stored in an efficient way on disc. Practical examples of recording formats such as the DVD+MRW (Mt Rainier) and the Blu-ray Disc standard, have defined Defect Lists and Defect List entries. Note that ordering of the entries in the Defect List usually is prescribed in the standards, and therefore changing the order is not a practical solution. Therefore an additional table of file remapping information is formed in which the order of the Defect Entries is file related. The additional table has to be used separately from the normal Defect List. All defect entries belonging to a single file may be organized as a set. The order of the various sets in the additional table could be based on the lowest Physical Sector Number in each of the sets. A special bit in the table can easily indicate the border between two succeeding sets in the table. For example for a Blu-ray Disc the maximum number of defect entries is 32759 for single layer and 65527 for dual layer discs. Therefore the additional table will have a size of 128kByte or 256kByte (32759*4 bytes per entry is approximately equal to 128 kByte). Another option to store the file related remapping information is via a linked list.

In the present standards, such as BD and DVD+MRW, there is no predefined location available to store the additional tables. A new special area may be reserved for the file remapping information. For example, the additionally stored file remapping information may be located in the lead-in, or in an area already reserved for system use, such as the Inner Spare Area. In the latter case the file remapping information area has to be reserved via setting corresponding system area entries, e.g. for the Inner Spare Area indicating unusable areas in the Defect List.

In an embodiment the file remapping storage unit 33 is arranged for creating the file remapping information in an iterative way. At first estimations from analyzing the write commands serve as a first indication. In practice the read commands provide additional and more reliable information. This is because reading data typically occurs more often than writing data. It may naturally occur that a certain set of files is always read in a certain consecutive order. In such a case it will be very hard for the drive to make a distinction between the various files. Hence the drive may consider such files to be a single file, which is no problem. The object of this invention is to speed up the read process. If multiple files are (almost) always read in a consecutive order, according to this invention from a drive point of view these files can be considered as a single file for which replacement blocks are to be retrieved in a single preparatory read action. This is basically the same as a large single file that consists of multiple extents.

Inside the drive there are several ways to determine which defects belong to a single file. A first option is to keep track of the addresses in the user data area that are requested in the read and write commands. Based on the file layout that is determined from that information the drive can determine which remapped entries belong together. A second option would be to only keep track of accessing remapped blocks that occurs in the short period of time while reading or writing. The second option has the advantage that it would typically require less memory. Hence determining of address ranges being part of a file may be based on detecting write or read commands for coherent address ranges, or recurring write or read commands at regular intervals in time. Coherent address ranges may be deduced from consecutive ranges, or from a combination of address ranges written or read consecutively. Note that the device may use estimated results first and may improve the estimated file remapping information over time, e.g. by updating a file remapping information reliability counter for a combination of address ranges that is estimated to constitute a file.

A disturbing factor could be the multi-tasking capability of modem PCs, which could result in multiple applications requesting data from different files in the same period of time. A similar situation is true for writing data from multiple applications to the disc at the same period in time. The file remapping storage unit 33 may be arranged for detecting if some files are accidentally combined initially. The file remapping information may be corrected later based on further read commands. The algorithm could take this in consideration by analyzing the data requests over a longer period of time and base its conclusions on multiple read actions to each file.

In practice situations may occur in which files are sometimes read as real-time files (certain amount of data in a certain amount of time) and sometimes read as 'best effort' traffic (i.e. as fast as possible). An example is playing a certain video file to playback the video information on the screen, compared to a copy action of the video file. The algorithm that determines which remapped defects typically belong to a single set may take this varying usage into account. In the algorithm for example, the number of each of the usage occurrences could be taken into account. Via an application it would also be possible to adapt the algorithm such that maximum performance for one of the two typical use cases is achieved. For example the application may be actively controlled by the user, or may take into account the type of user commands.

Although the invention has been explained mainly by embodiments using a DVD+RW or BD defect management system, similar defect management systems used for other types of record carriers are suitable for applying the invention. Also for the information carrier an optical disc has been described, but other media, such as a magnetic hard disc, can be used. It is noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' may be represented by the same item of hardware. Further, the scope of the invention is not limited to the embodiments, and the invention lies in each and every novel feature or combination of features described above.

## Claims

1. Method of defect management for use in recording information on a record carrier having a track for carrying information blocks having logical addresses, which recording comprises
- locating each block at a physical address in the track,
- translating the logical addresses into the physical addresses and vice versa in dependence on defect management information,
- managing the defect management information, the defect management information comprising defect information on a defective status of physical addresses and remapping information on translating a logical address initially mapped to an initial physical address to an alternate physical address,
which method comprises
- determining and additionally storing file remapping information (60) based on the defect management information and organized corresponding to files, and
- retrieving the file remapping information (60) for retrieving defect management information related to a file to be retrieved.

2. Device for scanning a record carrier having a track for carrying information blocks having logical addresses, which device comprises
- scanning means (22) for scanning the track on the record carrier, and
- control means (20) for controlling locating each block at a physical address in the track, the control means comprising
- addressing means (31) for translating the logical addresses into the physical addresses and vice versa in dependence on defect management information,
- defect management means (32) for managing the defect management information, the defect management information comprising defect information on a defective status of physical addresses and remapping information on translating a logical address initially mapped to an initial physical address to an alternate physical address,
- file remapping retrieval means (34) for retrieving file remapping information for retrieving defect management information related to a file to be retrieved, which file remapping information is based on the defect management information and organized corresponding to files.

3. Device as claimed in claim 2, wherein the control means (20) comprise file remapping storage means (33) for determining and additionally storing the file remapping information based on the defect management information and organized corresponding to files.

4. Device as claimed in claim 3, wherein the file remapping storage means (33) are arranged for determining the file remapping information based on received write commands.

5. Device as claimed in claim 3, wherein the file remapping storage means (33) are arranged for determining the file remapping information based on received read commands.

6. Device as claimed in claim 4 or 5, wherein the file remapping storage means (33) are arranged for said determining by detecting write commands for writing coherent address ranges or read commands for reading coherent address ranges.

7. Device as claimed in claim 3, wherein the file remapping storage means (33) are arranged for determining the file remapping information based on file system information, or based on communicating with a host having file system information.

8. Device as claimed in claim 3, wherein the file remapping storage means (33) are arranged for writing the file remapping information on the record carrier.

9. Device as claimed in claim 2, wherein the file remapping retrieval means (34) are arranged for reading the file remapping information from the record carrier.

10. Device as claimed in claim 2, wherein the file remapping retrieval means (34) are arranged for said retrieving defect management information by reading defect management information for at least a part of the file to be retrieved in at least one of the following ways:
- prior to reading information blocks of the file,
- during reading information blocks of the file if a jump to a further physical address is to be performed,
- during reading information blocks of the file if sufficient information blocks have been temporarily stored in a buffer memory, or
- when a first remapped information block is to be retrieved.

11. Device as claimed in claim 2, wherein the file remapping retrieval means (34) are arranged for said retrieving defect management information by reading and temporarily storing defect management information for at least a part of the file to be retrieved subsequent to a part of the file covered by a current read command.

12. Computer program product for defect management for use in recording information, which program is operative to cause a processor to perform the method as claimed in claim 1.
